# FASCICULE DE BREVET EUROPEEN

(11) **EP 2 707 754 B1**
(45) Date de publication et mention de la délivrance du brevet: **04.03.2015**
(21) Numéro de dépôt: 12716391.3
(22) Date de dépôt: 19.04.2012
(51) Int. Cl.: G01T 3/00, C01B 35/02

(54) **PROCEDE DE DEPOT DE BORE SUR UNE TOLE METALLIQUE POUR APPAREIL DE DETECTION DE NEUTRONS OU CHAMBRE D'IONISATION**
VERFAHREN ZUR ABSCHEIDUNG VON BOR AUF BLECH FÜR EINEN NEUTRONENDETEKTOR ODER EINE IONISATIONSKAMMER
METHOD OF DEPOSITING BORON ON SHEET METAL FOR NEUTRON DETECTION APPARATUS OR IONIZATION CHAMBER

(30) Priorité: 12.05.2011 FR 1154134
(43) Date de publication de la demande: 19.03.2014
(73) Titulaire: O.T.N.D. - ONET TECHNOLOGIES NUCLEAR DECOMMISSIONING, 13258 Marseille Cedex 09 (FR)
(72) Inventeur: ROTTNER, Bernard, F-13009 Marseille (FR); PARTYKA, Stanislas, F-34830 Clapiers (FR)
(74) Mandataire: Debay, Yves
(86) Numéro de dépôt international: PCT/EP2012/057164
(87) Numéro de publication internationale: WO 2012/152558

(56) Documents cités:
- EP-A1- 1 249 844
- DE-A1-102004 003 399
- US-A1- 2003 213 917
- US-A1- 2010 314 549
- OYAIDZU M ET AL: "Preparation of pure boron coating film and its characterization by XPS and TDS", APPLIED SURFACE SCIENCE, ELSEVIER, AMSTERDAM, NL, vol. 244, no. 1-4, 15 mai 2005 (2005-05-15), pages 240-243, XP025284702, ISSN: 0169-4332, DOI: 10.1016/J.APSUSC.2004.10.133 [extrait le 2005-05-15]

## Description

La présente invention concerne le domaine des appareils de détection plus particulièrement un procédé de dépôt d'une couche solide de bore sur un support métallique pour un appareil de détection de neutrons. Ce procédé est également intéressant pour les chambres d'ionisation.

Le document publié sous le numéro FR 2960303 décrit un tel appareil de détection de neutrons. Cet appareil de détection comporte une enceinte formant cathode remplie d'un gaz et comportant un corps creux. Ce corps creux comprend deux parois principales reliées par des parois latérales et présentant deux surfaces internes sensiblement parallèles entre elles et recouvertes d'une couche solide contenant du bore ou un composé du bore. Un dispositif formant anode s'étend à l'intérieur de l'enceinte. Cet appareil comprend également au moins une paroi intercalaire formant cathode fixée sur les parois latérales et s'étendant à l'intérieur de l'enceinte de façon sensiblement parallèle aux surfaces internes du corps creux. La ou les parois intercalaires reçoivent chacune une couche solide contenant du bore ou un composé de bore.

Le procédé de réalisation de la couche solide de bore proposé par le document est le dépôt ou la projection d'une suspension borée ou autrement appelée encre à base de nanoparticules de bore sur les supports dont les surfaces doivent être recouvertes d'une couche solide de bore. Le support est préalablement chauffé afin que l'encre sèche immédiatement sans qu'elle n'ait le temps de couler latéralement. En outre, un agent tensioactif est mélangé à l'encre pour s'assurer d'un dépôt homogène et améliorer l'adhérence des nanoparticules sur la surface du support. Or, ce procédé ne garantit pas l'homogénéité de l'épaisseur de la couche solide de bore ni une bonne fixation de cette couche. En effet, si par exemple l'encre ne sèche pas assez vite, l'épaisseur de la couche sur la partie du support se situant le plus bas par rapport au sol lors du séchage sera plus importante que la partie située le plus haut. Une position parfaitement horizontale du support pourrait résoudre ce problème mais il sera quand même nécessaire d'ajouter un tensioactif dans des proportions allant de 30% à 40% pour s'assurer de l'adhérence des nanoparticules sur le support. L'ajout de ce tensioactif réduit l'efficacité de la couche de bore et donc de l'appareil de détection.

Il existe d'autres procédés de dépôt de couche solide de bore comme la pulvérisation cathodique, le dépôt en phase vapeur ou le dépôt par dissociation thermique de boranes. Mais, le procédé de pulvérisation cathodique nécessite des temps de traitement longs et la couche obtenue n'est pas stable et se désagrège facilement. Le procédé de dépôt en phase vapeur nécessite de très hautes températures qui sont au voisinage de la température de vaporisation du bore de l'ordre de 3927°C. Le procédé de dépôt par dissociation thermique de boranes oblige à l'utilisation de gaz à la fois explosifs et toxiques. De plus, ce procédé de dépôt ainsi que le procédé de dépôt en phase vapeur coûte cher car il réclame l'utilisation de 3 g à 5 g de bore 10 (¹⁰B) pour un gramme déposé. Or, le ¹⁰B est très cher et un appareil de détection de neutrons a besoin d'environ 50 g de ¹⁰B déposé.

Le dépôt d'une couche solide de bore est donc un point délicat dans la fabrication d'un appareil de détection de neutrons. Afin d'avoir une bonne efficacité de l'appareil, les couches de bore sont essentiellement composées de ¹⁰B d'épaisseur contrôlée entre 0,03 mg/cm² et 0,5 mg/cm². La densité du bore naturel est de 2,34 et celle du ¹⁰B est légèrement inférieure et égale à 2,16. Une valeur de 0,1 mg/cm² correspond alors à une épaisseur de 460 nm et 0,4 mg/cm² à 1850 nm. L'épaisseur doit être contrôlée à 20% près. De plus, la proportion de ¹⁰B dans la couche doit être aussi proche que possible de 100%, ce qui non seulement impose l'usage de bore enrichi en ¹⁰B mais aussi limite fortement l'usage d'additifs tels que les tensioactifs, les dispersants ou les colles.

La présente invention a donc pour objet de pallier un ou plusieurs des inconvénients de l'art antérieur en proposant un procédé de dépôt bon marché, peu dangereux, facile à mettre en oeuvre et efficace.

À cet effet, l'invention concerne un procédé tel que défini dans la revendication 1 de dépôt d'une couche solide de bore sur un support métallique destiné à un appareil de détection de neutrons ou une chambre d'ionisation caractérisé en ce que le procédé comprend au moins une étape de dépôt d'au moins une couche comportant du bore sous forme de nanoparticules sur le support métallique et une étape de pressage à froid du support métallique avec la couche comportant du bore, la proportion de bore 10 (¹⁰B) dans la couche déposée sur le support métallique étant comprise entre 80% et 100%.

Selon une autre particularité, l'étape de dépôt est précédée d'une étape de pré-pressage du support métallique.

Selon une autre particularité, l'étape de dépôt d'au moins une couche (1) comportant du bore sur le support (2, 3) métallique est une étape de dépôt d'une encre à base de nanoparticules de bore (NPB) sur le support (2, 3) métallique ; l'étape de dépôt de l'encre à base de NPB sur le support (2, 3) métallique étant suivie d'une étape de séchage du support (2, 3) métallique sur laquelle a été déposée l'encre pour ne laisser que les NPB et le dispersant sur le support (2, 3) métallique ;
- l'étape de pressage à froid du support (2, 3) métallique s'effectue sur le support (2, 3) métallique avec les NPB et le dispersant laissés sur le support (2, 3) métallique ; l'étape de pressage à froid du support (2, 3) métallique avec la couche (1) comportant du bore étant éventuellement précédée ou suivie d'une étape de cuisson du support (2, 3) métallique pour évaporer l'eau fixée dans les pores des NPB et incinérer ou calciner le dispersant.

Selon une autre particularité, l'encre à base de NPB est fabriquée par au moins :
- une étape de fabrication des NPB ;
- une étape de mise en suspension des NPB dans un solvant contenant un mélange dispersant.

Selon une autre particularité, la concentration du mélange dispersant dans l'encre est inférieure à 0,05 %, et ce mélange dispersant comprend une tête polaire cationique et un polymère associatif.

Selon une autre particularité, la concentration des NPB dans l'encre est inférieure à 5 %.

Selon une autre particularité, l'étape de dépôt de l'encre à base de NPB sur le support métallique est exécutée au pinceau, l'épaisseur du dépôt étant dépendante de la concentration des NPB dans l'encre et de la quantité d'encre, cette quantité étant définie d'après la surface du support métallique à recouvrir par le dépôt de l'encre.

Selon une autre particularité, l'étape de dépôt de l'encre à base de NPB sur le support métallique est exécutée par projection d'un jet d'encre, l'épaisseur du dépôt étant dépendante de la concentration des NPB dans l'encre, du débit du jet, de la dimension du jet et de la vitesse relative de balayage du jet.

Selon une autre particularité, le dépôt de l'encre sur le support métallique est exécuté par un procédé de dépôt par trempage dans lequel le support métallique est trempé dans l'encre, l'encre comprenant éventuellement un liant destiné à favoriser l'adhérence des NPB sur le support métallique et/ou un épaississant destiné à ajuster la viscosité de l'encre.

Selon une autre particularité, le dépôt de l'encre sur le support métallique est exécuté par un procédé d'étalement au couteau.

Selon une autre particularité, l'étape de dépôt d'au moins une couche (1) comportant du bore est précédée d'une étape de nettoyage du support métallique pour ôter d'éventuels résidus à l'aide de produits tensio-actifs spécifiques.

Selon une autre particularité, le support métallique est une tôle en aluminium.

L'invention concerne également un appareil de détection de neutrons tel que défini dans la revendication 13 du type compteur proportionnel ou chambre d'ionisation à gaz caractérisé en ce qu'il comporte au moins une enceinte formant cathode, ladite enceinte étant remplie d'un gaz et comportant un corps creux comprenant deux parois principales présentant respectivement deux surfaces internes sensiblement parallèles entre elles et recouvertes chacune d'une couche solide de bore ou un composé de bore obtenue par pressage à froid, l'appareil comportant, en outre, un dispositif formant anode s'étendant à l'intérieur de ladite enceinte.

Selon une autre particularité, l'appareil comporte en outre une ou plusieurs parois intercalaires formant cathode, fixée sur lesdites parois latérales et s'étendant à l'intérieur de ladite enceinte de façon sensiblement parallèle aux surfaces internes du corps creux, la ou chaque paroi intercalaire présentant deux surfaces opposées en regard des surfaces internes respectives des deux parois principales du corps creux et recouvertes chacune d'une couche solide contenant du bore ou un composé de bore obtenue par pressage à froid, le dispositif formant anode présentant au moins une partie s'étendant dans un espace entre la paroi intercalaire et l'une des surfaces internes d'une première paroi principale du corps creux et au moins une autre partie s'étendant dans un autre espace entre la paroi intercalaire et l'autre surface interne de la deuxième paroi principale du corps creux.

L'invention concerne également un dispositif de détection de neutron utile pour la détection de neutrons émis par un objet volumineux tel qu'un fût de déchets radioactifs comportant une pluralité d'appareils de détection selon l'invention, la pluralité d'appareils de détection délimitant une grande cavité à l'intérieur de laquelle on peut disposer un objet volumineux.

D'autres particularités et avantages de la présente invention apparaîtront plus clairement à la lecture de la description ci-après, faite en référence aux dessins annexés :
- la figure 1 représente une vue en coupe de l'appareil de détection de neutrons ;
- la figure 2a représente une photographie de la couche de bore avant l'étape de pressage à froid ;
- la figure 2b représente une photographie de la couche de bore après l'étape de pressage à froid ;
- la figure 3 représente schématiquement un dispositif de détection de neutrons réalisé à partir des appareils de détection de neutrons selon une configuration.

L'invention va être décrite en référence aux figures énumérées ci-dessus.

La présente invention propose un procédé de dépôt d'une couche (1) solide de bore sur un support (2, 3) métallique destiné à un appareil (0) de détection de neutrons. Ce procédé peut être également applicable aux parois d'une chambre d'ionisation.

Ce procédé comprend au moins une étape de dépôt d'au moins une couche (1) comportant du bore sur le support (2, 3) métallique et une étape de pressage à froid du support (2, 3) métallique avec la couche (1) comportant du bore. Le bore de la couche du bore est de préférence du bore 10 dans une proportion massique comprise entre 90% et 100%, de préférence entre 99% et 100%, ce qui permet d'obtenir des proportions massiques de bore 10 pour le dépôt supérieures à 80%, voire 90%.

Dans une configuration, afin de s'assurer d'avoir un support (2, 3) métallique de surface lisse et d'épaisseur constante, l'étape de dépôt peut être précédée d'une étape de pré-pressage du support (2, 3) métallique.

Dans une autre configuration, le pré-pressage permet de compenser les éventuelles imperfections du dispositif de presse en imposant, avant le dépôt de la ou des couches (1) comportant du bore, une déformation du support conforme à ces imperfections.

Le support (2, 3) métallique est, par exemple, une tôle en aluminium ou en alliage de métaux mous ou en métal mou tel que le cuivre, l'or, l'argent, l'étain, le platine, le plomb, le zinc, le fer ou le nickel. Le procédé peut également être appliqué pour des supports en matière plastique.

L'étape de dépôt d'au moins une couche (1) comportant du bore sur le support (2, 3) métallique est une étape de dépôt d'une encre à base de nanoparticules de bore (NPB) sur le support (2, 3) métallique.

Cette étape de dépôt d'au moins une couche (1) comportant du bore peut éventuellement être précédée d'une étape de nettoyage du support (2, 3) métallique pour ôter d'éventuels résidus à l'aide de produits tensio-actifs spécifiques. En effet, les supports métalliques tels que les tôles d'aluminium sont généralement fabriqués par laminage à froid, ce qui est favorable au procédé de dépôt car cela donne une surface très lisse et une épaisseur homogène du support. Toutefois, lors du laminage, le support est souvent protégé par un film plastique collé. Les résidus de colle sont très gênants et empêchent un dépôt homogène. Ils sont de plus fortement adhérents à la surface et difficiles à ôter. Il faut donc, soit se fournir en support (2, 3) métallique non encollés, soit ôter les résidus de colles par, par exemple, un traitement thermique à 350°C pendant 2 h au moins, ou plongée dans une solution de soude 3 M pendant 30 s, ou plongée dans de l'eau de javel pendant 15 min, ou plongée dans une solution dégraissante ou produits tensio actifs spécifiques, par exemple du pétrole désarômatisé, ou frottis de la surface à nettoyer avec un chiffon imprégné de cette même solution dégraissante.

L'encre à base de NPB est fabriquée par plusieurs étapes dont au moins une étape de fabrication des NPB et une étape de mise en suspension des NPB dans un solvant contenant un dispersant.

La teneur maximale de NPB est par exemple de 5%. De manière avantageuse, le dispersant est un mélange d'une tête cationique, par exemple le bromure de phényl-triméthyl-ammonium (fournisseur « *Fluka* ») et de polymère associatif, par exemple du polyacrylate greffé par des chaînes alkyles de poids moléculaire 750 000 et de longueur 30 Å (fournisseur « *Coatex* », référence RSY 15031), en concentration totale dans l'encre inférieure à 0,05%.

La taille des NPB doit être plus petite que l'épaisseur du dépôt. Donc, elle est inférieure à 460 nm pour un dépôt de 0,1 mg/cm².

Les NPB sont fabriquées selon une méthode qui comprend au moins les étapes suivantes :
- une étape de synthèse d'un composé lithium/bore (LiB) sous atmosphère inerte ou sous vide à une température de l'ordre de 650°C ;
- une étape d'hydrolyse du composé LiB dans un bain d'eau distillée soumis à des ultrasons ;
- une étape de séparation des NPB des autres produits issus de l'hydrolyse du composé LiB par, par exemple, au moins une filtration tangentielle.

L'étape d'hydrolyse est réalisée dans un bain d'eau distillée soumis à des ultrasons ou autrement dit soniqué. Cette sonication utilise des ultrasons qui, par exemple, peuvent avoir des fréquences de l'ordre de 20 kHz et de puissance de l'ordre d'au moins 100 W par litre de solution, de préférence 350 W/L. Ces valeurs ne sont pas limitatives et peuvent être changée pour obtenir une sonication plus efficace et ainsi obtenir des tailles de NPB plus réduites.

Les NPB obtenues après l'étape d'hydrolyse ont un diamètre de l'ordre de 300 nm. Ces NPB sont poreuses avec une porosité estimée à 50%. Ainsi le diamètre de 300 nm correspond à un diamètre de particule massive de 150 nm.

Après l'étape d'hydrolyse, les NPB sont séparées par filtration tangentielle. La solution obtenue après hydrolyse est donc filtrée à travers une ou des membranes minérales tubulaires, par exemple, de longueur 25 mm, de diamètre interne de 8 mm et de surface membranaire efficace de 40 cm². La ou les membranes peuvent être, par exemple, en alumine avec une couche filtrante en oxyde de zirconium d'épaisseur 15 µm. La solution obtenue après chaque filtration peut être rediluée dans l'eau distillée, puis refiltrée. Ainsi, 2 à 4 passes de filtration, par exemple, peuvent être effectuées. La filtration permet de concentrer les NPB d'un facteur 20 environ, sans concentrer la lithine ou hydroxyde de lithium (LiOH) qui est un sous produit de la synthèse des NPB. La dilution du concentrât, contenant les NPB, dans l'eau distillée permet de diminuer d'un facteur 20 la concentration de lithine. Deux passes de filtration/dilution dans l'eau distillée permettent de diminuer d'un facteur 400 la concentration de lithine, trois passes d'un facteur 8000, quatre passes d'un facteur 160 000, etc.

La filtration tangentielle est une technique dite « sur étagère » faisant partie de l'art antérieur. Il faut néanmoins préciser que ses applications valorisent en général l'eau, qui est purifiée par ce procédé, et que le procédé doit plutôt valoriser le concentrât, qui contient les NPB. De ce fait, il faut adapter la technique, notamment en limitant le volume minimal de concentrât.

Optionnellement, l'étape de filtration est suivie d'une étape de broyage mécanique qui permet d'obtenir des NPB de diamètre de 100 nm. Le broyage mécanique comprend au moins :
- une étape de séchage des NPB par évaporation sous vide ;
- une étape de mise en suspension des NPB dans un solvant non oxygéné ;
- une étape de broyage des NPB dans le solvant non oxygéné dans un broyeur planétaire ;
- une étape de séchage des NPB par évaporation sous vide.

Le broyage mécanique est une étape optionnelle qui est plutôt adaptée aux dépôts de faible épaisseur. Par broyage mécanique, on peut atteindre des tailles de NPB de 100 nm.

Le solvant non oxygéné utilisé pendant l'étape de mise en suspension peut être, par exemple, du cyclohexane. Ce solvant est de préférence non oxygéné afin d'éviter l'oxydation du bore sous l'effet de fortes élévations locales de température lors du broyage.

Les NPB ainsi fabriquées sont mises en suspension dans un solvant volatile tel que le cyclohexane ou l'eau, solvant dans lequel a été dissout un dispersant organique en concentration faible correspondant à moins de 1% de la masse de bore. Ce dispersant a pour rôle d'éviter que les NPB ne d'agglomèrent entre elles.

Des essais des inventeurs ont montré qu'au-delà d'une teneur de 6 % dans l'encre, les NPB s'agglomèrent entre elles, compromettant ainsi l'homogénéité du dépôt qui sera réalisé. Donc, de l'encre avec une teneur de NPB de 5% a été produite de manière à minimiser la proportion de dispersant par rapport à la masse de NPB, la concentration nécessaire en dispersant dans l'encre dépendant peu de la teneur en NPB.

Les inventeurs ont commencé par tester des polymères dispersants de type polyacrylate adoptant une structure en peigne. Leurs essais ont montré qu'une teneur de l'ordre de 10 % (par rapport à la masse de bore) était nécessaire. Puis, ils ont obtenu un gain significatif, avec un mélange tensioactifs cationiques (Empigen Bac 50, fournisseur « *Huntsman* ») à 0,07 % et un polymère associatif, le polyacrylate greffé par des chaînes alkyles de poids moléculaire 750 000 et de longueur 30 A (fournisseur « *Coatex* », référence RSY 15031) à 0,03 %, soit au total 2 % de dispersant par rapport à la masse de bore. Enfin, ils ont testé avec succès la tête cationique du tensioactif précédent (bromure de phényl-triméthyl-ammonium, fournisseur : « *FLUKA »*) en teneur très faible, 0,005 %, et en mélange avec le polymère associatif précédent en teneur de 0,025 %, soit au total 0,6 % de dispersant par rapport à la masse de bore.

Les têtes cationiques se fixent sur les NPB, chargées négativement, ce qui assurent leur dispersion. Le polymère associatif crée un réseau tridimensionnel dans l'encre, stabilisant la suspension.

Le mélange ainsi obtenu est une solution appelée encre à base de NPB.

L'étape de dépôt de l'encre à base de NPB sur le support (2, 3) métallique est suivie d'une étape de séchage, par exemple par chauffage sous vide du support (2, 3) métallique sur laquelle a été déposée l'encre pour ne laisser que les NPB et le dispersant sur le support (2, 3) métallique.

Le dépôt de l'encre à base de NPB sur le support (2, 3) métallique peut être exécuté selon différentes méthodes.

Dans une première méthode, le dépôt est exécuté au pinceau. Dans ce cas, l'épaisseur du dépôt est dépendante de la concentration des NPB dans l'encre et de la quantité d'encre, cette quantité étant définie d'après la surface du support (2, 3) métallique à recouvrir par le dépôt de l'encre.

Pour un dépôt de 0,2 mg/cm², par exemple, et une concentration de 5 % de NPB dans l'encre, il faut utiliser 4 mg/cm² d'encre, ce qui représente une couche d'environ 40 µm.

Dans une deuxième méthode, le dépôt de l'encre sur le support (2, 3) métallique est exécuté par projection d'un jet d'encre. Dans ce cas, l'épaisseur du dépôt est dépendante de la concentration des NPB dans l'encre, du débit du jet, de la dimension du jet et de la vitesse de balayage du jet.

Typiquement mais de façon non limitative, la largeur du jet dans la zone d'impact sur l'aluminium est de 3 mm, et la vitesse d'avance de 10 cm/s. Dans ces conditions, pour un dépôt de 0,2 mg/cm² par exemple et 5% de NPB dans l'encre, il faut projeter 12mg/s d'encre. L'aspect thixotropique de l'encre évite les coulures après projection, à condition de projeter à plat.

Dans une troisième méthode, le dépôt de l'encre sur le support (2, 3) métallique est exécuté par un procédé de dépôt par trempage (*dip coating*) dans lequel le support (2, 3) métallique est trempé dans l'encre. L'encre peut éventuellement comprendre en outre un liant destiné à favoriser l'adhérence des NPB sur le support (2, 3) métallique et/ou un épaississant destiné à ajuster la viscosité de l'encre.

Dans une quatrième méthode, méthode préférée, l'encre est étalée au couteau par un appareil appeler « *bar coater ».* Cette technique de *bar coating* permet de réaliser des couches homogènes d'encre d'épaisseur supérieure de 10 µm à 20 µm. Pour un dépôt de 0,1 mg/cm² ou plus, l'encre à 5 % de NPB est adaptée. En-dessous de 0,05 mg/cm², il est nécessaire de diluer l'encre, ce qui n'est pas trop gênant compte tenu des très faibles teneurs en dispersant que nous avons pu obtenir. De 0,05 mg/cm² à 0,1 mg/cm², l'encre à 5% est utilisable, mais il est préférable de la diluer légèrement parce que la technique d'étalement au couteau nécessite un grand soin.

L'étape suivante décrivant l'étape de pressage à froid du support (2, 3) métallique est réalisée pour les différentes configurations.

Dans le premier mode de réalisation, l'étape de pressage à froid du support (2, 3) métallique avec la couche (1) comportant du bore est une étape de pressage à froid du support (2, 3) métallique avec les NPB et le dispersant laissés sur le support (2, 3) métallique.

Cette étape de pressage à froid est effectuée de préférence avec un laminoir à deux rouleaux.

Une méthode alternative met en oeuvre une presse de type « rouleau à pâtisserie ». Dans cette configuration de laminoir, un rouleau fait face à une plaque martyre dure, rigide et plane. Le rouleau peut se déplacer par rapport à la plaque martyre qui est fixe ou inversement la plaque martyre peut se déplacer par rapport au rouleau qui est fixe. La pression de laminage est comprise entre 10 MPa et 40 MPa par exemple pour un support en aluminium.

Un pressage statique est possible mais pose des problèmes pratiques notamment en raison des forces très grandes à appliquer de manière homogène sur de grandes surfaces.

Le dispositif de presse, laminoir à un ou deux rouleaux ou presse à plat, peut être également utilisé avantageusement pour l'étape de pré-pressage du support (2, 3) métallique.

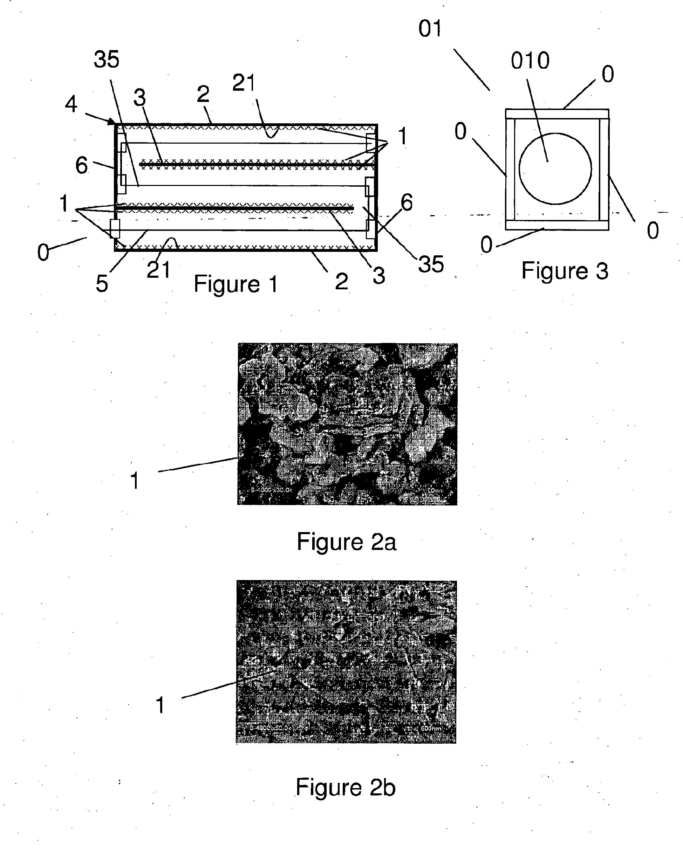

Cette étape de pressage à froid a pour effet de fixer les NPB sur le support (2, 3) métallique et de lisser la surface du dépôt. Les figures 2a et 2b sont des photographies illustrant l'effet du laminage avant le laminage (figure 2a) et après le laminage (figure 2b).

L'étape de pressage à froid du support (2, 3) métallique avec la couche (1) comportant du bore est éventuellement précédée ou suivie d'une étape de cuisson du support (2, 3) métallique pour évaporer l'eau fixée dans les pores des NPB et incinérer ou calciner le dispersant. Le séchage presque complet nécessite une température de 300°C, de manière à extraire l'eau des pores des NPB. Le chauffage nécessaire à l'étape de séchage peut être poursuivi pour calciner sous vide ou sous atmosphère neutre ou incinérer sous air le mélange dispersant. L'eau libre doit nécessairement être évaporée, par exemple à 80°C sous vide avant l'étape de pressage à froid. Un chauffage ultérieur, pour séchage complémentaire ou cuisson, peut être réalisé avant ou après l'étape de pressage à froid. Il est réalisé préférentiellement avant cette étape afin que les dégazages consécutifs au séchage poussé et à la cuisson n'abîment pas l'état de surface du dépôt de la couche. L'usage du mélange dispersant amélioré décrit ci-dessus (tête cationique + polymère associatif) rend inutile l'étape de calcination ou incinération par chauffage au-delà de 300°C, du fait de sa très faible teneur. Avec les premiers dispersants utilisés, polyacrylates en peigne, la calcination était souhaitable pour réduire la teneur de la couche de bore en additif. Les analyses thermogravimétriques ont montré que l'optimum (minimum de poids pour une couche de NPB donnée) est obtenu pour une incinération (sous air) à 350 °C.

Un autre but de l'invention est un appareil (0) de détection de neutrons du type compteur proportionnel à gaz ou chambre d'ionisation.

Cet appareil (0) comporte une enceinte (4) formant cathode. Cette enceinte (4) est remplie d'un gaz et comporte un corps creux comprenant deux parois (2) principales présentant respectivement deux surfaces (21) internes sensiblement parallèles entre elles et recouvertes chacune d'une couche (1) solide de bore ou un composé de bore obtenue par pressage à froid. Les parois latérales de l'enceinte peuvent être également recouvertes d'une couche (1) solide de bore ou d'un composé de bore obtenue par pressage à froid pour augmenter l'efficacité de l'appareil (0) de détection.

L'appareil comporte en outre un dispositif (5) formant anode s'étendant à l'intérieur de ladite enceinte (4).

Optionnellement, une ou plusieurs parois (3) intercalaires formant cathode, sont fixées sur lesdites parois (6) latérales et s'étendent à l'intérieur de ladite enceinte (4) de façon sensiblement parallèle aux surfaces (21) internes du corps creux. La ou chaque paroi (3) intercalaire présente deux surfaces opposées en regard des surfaces (21) internes respectives des deux dites parois (2) principales du corps creux et sont recouvertes chacune d'une couche (1) solide contenant du bore ou un composé de bore déposé par pressage à froid. Le dispositif (5) formant anode présente au moins une partie s'étendant dans un espace entre la paroi (3) intercalaire et l'une des surfaces (21) internes d'une première paroi (2) principale du corps creux et au moins une autre partie s'étendant dans un autre espace entre la paroi (3) intercalaire et l'autre surface (21) interne de la deuxième paroi (2) principale du corps creux. Les supports (2, 3) métalliques sont les deux dites parois (2) principales dont la surface (21) internes est recouverte de la couche (1) comportant du bore et les deux surfaces des parois (3) intercalaires.

Selon une configuration, l'appareil peut comprendre plusieurs parois (3) intercalaires, formant cathode, parallèles entre elles et aux deux surfaces (21) internes des deux parois (2) principales et recouvertes de couches (1) solides contenant du bore ou un composé de bore déposé par pressage à froid sur leur deux surfaces opposées respectives. Le dispositif (5) formant anode présente au moins une partie s'étendant dans l'espace entre chaque paroi (2) principale et la paroi (3) intercalaire la plus proche et au moins une partie s'étendant dans chaque espace entre deux parois (3) intercalaires successives.

Selon une configuration, Les parois (2) principales et les parois (6) latérales sont rectangulaires. Les parois (6) latérales comprennent deux premières parois latérales et deux deuxièmes parois latérales reliant les parois (2) principales de manière à définir un corps creux en forme de plaque creuse parallélépipédique. Les surfaces internes et les parois (3) intercalaires sont sensiblement planes et parallèles entre elles.

Selon une configuration, chaque paroi (3) intercalaire présente au moins un orifice (35) contre ou à proximité d'une paroi (6) latérale, une partie de l'anode passant à travers ledit orifice (35).

Selon une configuration, le dispositif (5) formant anode est réalisé d'un seul tenant avec des parties d'anode solidaires les unes des autres.

Selon une configuration, une première paroi intercalaire comprend un premier orifice à proximité ou contre un premier angle à la jonction entre des premières première et deuxième parois latérales, et chaque paroi intercalaire qui lui est adjacente comprend un deuxième orifice à proximité ou contre un deuxième angle à la jonction entre des deuxièmes première et deuxième parois latérales le deuxième angle étant opposés audit premier angle, et le fil d'anode parcourt chaque espace entre une paroi intercalaire et une paroi principale et un espace entre deux parois intercalaires adjacentes, en faisant plusieurs allers-et-retours entre les deux premières parois latérales opposées parallèles ou entre les deux deuxièmes parois latérales opposées depuis un premier angle vers un deuxième angle. Le fil d'anode passe d'un espace entre deux parois à un autre en passant par les premier et deuxième orifices.

Un autre but de l'invention est un dispositif (01) de détection de neutrons utile pour la détection de neutrons émis par un objet (010) volumineux tel qu'un fût de déchets radioactifs comportant une pluralité d'appareils (0) de détection. La pluralité d'appareils (0) de détection délimite une grande cavité à l'intérieur de laquelle on peut disposer un objet (010) volumineux. Pour obtenir une efficacité correcte, Le dispositif (01) de détection de neutron défini par la pluralité d'appareils (0) peut être inséré dans une enceinte épaisse, par exemple d'une épaisseur de 10 cm minimum, de préférence 15 cm, en matériau hydrogéné, par exemple le polyéthylène ou le polypropylène. Par ailleurs, une couche interne en polyéthylène ou en polypropylène d'épaisseur comprise par exemple entre 0 cm et 2 cm, installée entre les appareils (0) et l'objet volumineux (010) peut permettre d'optimiser l'efficacité selon le contenu du fût (010) et l'efficacité recherchée.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de dépôt d'une couche (1) solide de bore sur un support (2, 3) métallique destiné à former la cathode d'un appareil (0) de détection de neutrons ou une chambre d'ionisation **caractérisé en ce que** le procédé comprend au moins une étape de dépôt d'au moins une couche (1) comportant du bore sous forme de nanoparticules sur le support (2, 3) métallique et une étape de pressage à froid du support (2, 3) métallique avec la couche (1) comportant du bore, la proportion de bore 10 (¹⁰B) dans la couche (1) déposée sur le support (2, 3) métallique étant comprise entre 80% et 100%.

2. Procédé selon la revendication 1, **caractérisé en ce que** l'étape de dépôt est précédée d'une étape de pré-pressage du support (2, 3) métallique.

3. Procédé selon la revendication 1 ou 2, **caractérisé en ce que** :
- l'étape de dépôt d'au moins une couche (1) comportant du bore sur le support (2, 3) métallique est une étape de dépôt d'une encre à base de nanoparticules de bore (NPB) sur le support (2, 3) métallique ; l'étape de dépôt de l'encre à base de NPB sur le support (2, 3) métallique étant suivie d'une étape de séchage du support (2, 3) métallique sur laquelle a été déposée l'encre pour ne laisser que les NPB et le dispersant sur le support (2, 3) métallique ;
- l'étape de pressage à froid du support (2, 3) métallique s'effectue sur le support (2, 3) métallique avec les NPB et le dispersant laissés sur le support (2, 3) métallique l'étape de pressage à froid du support (2, 3) métallique avec la couche (1) comportant du bore étant éventuellement précédée ou suivie d'une étape de cuisson du support (2, 3) métallique pour évaporer l'eau fixée dans les pores des NPB et incinérer ou calciner le dispersant.

4. Procédé selon la revendication 3, **caractérisé en ce que** l'encre à base de NPB est fabriquée par au moins :
- une étape de fabrication des NPB ;
- une étape de mise en suspension des NPB dans un solvant contenant un mélange dispersant.

5. Procédé selon la revendication 4, **caractérisé en ce que** la concentration du mélange dispersant dans l'encre est inférieure à 0,05 %, et **en ce que** ce mélange comprend une tête polaire cationique et un polymère associatif.

6. Procédé selon l'une des revendications 3 à 5, **caractérisé en ce que** la concentration des NPB dans l'encre est inférieure à 5 %.

7. Procédé selon l'une des revendications 3 à 6, **caractérisé en ce que** l'étape de dépôt de l'encre à base de NPB sur le support (2, 3) métallique est exécutée au pinceau, l'épaisseur du dépôt étant dépendante de la concentration des NPB dans l'encre et de la quantité d'encre, cette quantité étant définie d'après la surface du support (2, 3) métallique à recouvrir par le dépôt de l'encre.

8. Procédé selon l'une des revendications 3 à 6, **caractérisé en ce que** l'étape de dépôt de l'encre à base de NPB sur le support (2, 3) métallique est exécutée par projection d'un jet d'encre, l'épaisseur du dépôt étant dépendante de la concentration des NPB dans l'encre, du débit du jet, de la dimension du jet et de la vitesse relative de balayage du jet.

9. Procédé selon l'une des revendications 3 à 6, **caractérisé en ce que** le dépôt de l'encre sur le support (2, 3) métallique est exécuté par un procédé de dépôt par trempage dans lequel le support (2, 3) métallique est trempé dans l'encre, l'encre comprenant éventuellement un liant destiné à favoriser l'adhérence des NPB sur le support (2, 3) métallique et/ou un épaississant destiné à ajuster la viscosité de l'encre.

10. Procédé selon l'une des revendications 3 à 6, **caractérisé en ce que** le dépôt de l'encre sur le support (2, 3) métallique est exécuté par un procédé d'étalement au couteau.

11. Procédé selon l'une des revendications 1 à 10, **caractérisé en ce que** l'étape de dépôt d'au moins une couche (1) comportant du bore est précédée d'une étape de nettoyage du support (2, 3) métallique pour ôter d'éventuels résidus.

12. Procédé selon au moins une des revendications 1 à 11, **caractérisé en ce que** le support (2, 3) métallique est une tôle en aluminium.

13. Appareil (0) de détection de neutrons du type compteur proportionnel à gaz ou chambre d'ionisation **caractérisé en ce qu'**il comporte une enceinte (4) formant cathode, ladite enceinte étant remplie d'un gaz et comportant un corps creux comprenant deux parois (2) principales présentant respectivement deux surfaces (21) internes sensiblement parallèles entre elles, les deux surfaces (21) internes étant des supports recouverts chacun d'une couche (1) solide de bore ou un composé de bore obtenue par pressage à froid du support avec une couche comportant du bore sous forme de nanoparticules d'après le procédé selon une des revendications 1 à 12.

14. Appareil (0) selon la revendication 13, **caractérisé en ce qu'**il comporte en outre un dispositif (5) formant anode s'étendant à l'intérieur de ladite enceinte (4), au moins une paroi (3) intercalaire formant cathode, fixée sur lesdites parois latérales et s'étendant à l'intérieur de ladite enceinte (4) de façon sensiblement parallèle aux surfaces internes du corps creux, la ou chaque paroi (3) intercalaire présentant deux surfaces opposées en regard des surfaces internes respectives des deux dites parois principales du corps creux et recouvertes chacune d'une couche (1) solide contenant du bore ou un composé de bore obtenue par pressage à froid, et **en ce que** le dispositif (5) formant anode présente au moins une partie s'étendant dans un espace entre la paroi (3) intercalaire et l'une des surfaces (21) internes d'une première paroi (2) principale du corps creux et au moins une autre partie s'étendant dans un autre espace entre la paroi intercalaire et l'autre surface interne de la deuxième paroi principale du corps creux.

15. Dispositif (01) de détection de neutron utile pour la détection de neutrons émis par un objet (010) volumineux tel qu'un fût de déchets radioactifs comportant une pluralité d'appareils (0) de détection selon l'une des revendications 13 et 14, la pluralité d'appareils (0) de détection délimitant une grande cavité à l'intérieur de laquelle on peut disposer un objet (010) volumineux.

## Patentansprüche

1. Verfahren zum Aufbringen einer festen Borschicht (1) auf einen Metallträger (2, 3), der vorgesehen ist, um die Kathode einer Vorrichtung (0) zum Detektieren von Neutronen oder eine Ionisierungskammer auszubilden, **dadurch gekennzeichnet, dass** das Verfahren aufweist: mindestens einen Schritt des Aufbringens mindestens einer Bor in Form von Nanopartikeln aufweisenden Schicht (1) auf den Metallträger (2, 3) und einen Schritt des Kaltpressens des Metallträgers (2, 3) mit der Bor aufweisenden Schicht (1), wobei der Anteil von Bor 10 (¹⁰B) in der auf den Metallträger (2, 3) aufgebrachten Schicht (1) zwischen 80% und 100% beträgt.

2. Verfahren gemäß Anspruch 1, **dadurch gekennzeichnet, dass** dem Schritt des Aufbringens ein Schritt des Vorpressens des Metallträgers (2, 3) vorangeht.

3. Verfahren gemäß Anspruch 1 oder 2, **dadurch gekennzeichnet, dass**:
- der Schritt des Aufbringens mindestens einer Bor aufweisenden Schicht (1) auf den Metallträger (2, 3) ein Schritt des Aufbringens einer Druckfarbe auf Basis von Bornanopartikeln (NPB) auf den Metallträger (2, 3) ist, wobei auf den Schritt des Aufbringens der Druckfarbe auf NPB-Basis auf den Metallträger (2, 3) ein Schritt des Trocknens des Metallträgers (2, 3) folgt, auf den die Druckfarbe aufgebracht wurde, damit lediglich die NPBs und das Dispersionsmittel auf dem Metallträger (2, 3) zurückbleiben,
- der Schritt des Kaltpressens des Metallträgers (2, 3) auf dem Metallträger (2, 3) mit den NPBs und dem Dispersionsmittel, die auf dem Metallträger (2, 3) verblieben sind, durchgeführt wird, wobei dem Schritt des Kaltpressens des Metallträgers (2, 3) mit der Bor aufweisenden Schicht (1) gegebenenfalls ein Schritt des Brennens des Metallträgers (2, 3) vorangeht oder auf diesen folgt, um das in den Poren der NPBs festgesetzte Wasser zu verdampfen und das Dispersionsmittel zu verbrennen oder zu kalzinieren.

4. Verfahren gemäß Anspruch 3, **dadurch gekennzeichnet, dass** die Druckfarbe auf NPB-Basis durch mindestens:
- einen Schritt des Herstellens der NPBs
- und einen Schritt des Suspendierens der NPBs in einem eine Dispersionsmittelmischung enthaltenden Lösungsmittel
hergestellt wird.

5. Verfahren gemäß Anspruch 4, **dadurch gekennzeichnet, dass** die Konzentration der Dispersionsmittelmischung in der Druckfarbe kleiner als 0,05 % ist, und dass die Mischung einen kationischen polaren Kopf und ein assoziatives Polymer aufweist.

6. Verfahren gemäß einem der Ansprüche 3 bis 5, **dadurch gekennzeichnet, dass** die Konzentration der NPBs in der Druckfarbe kleiner als 5 % ist.

7. Verfahren gemäß einem der Ansprüche 3 bis 6, **dadurch gekennzeichnet, dass** der Schritt des Aufbringens der Druckfarbe auf NPB-Basis auf den Metallträger (2, 3) mit Pinsel durchgeführt wird, wobei die Aufbringungsdicke abhängig ist von der NPB-Konzentration in der Druckfarbe und der Menge an Druckfarbe, wobei die Menge gemäß der durch das Aufbringen der Druckfarbe zu bedeckenden Fläche des Metallträgers (2, 3) definiert wird.

8. Verfahren gemäß einem der Ansprüche 3 bis 6, **dadurch gekennzeichnet, dass** der Schritt des Aufbringens der Druckfarbe auf NPB-Basis auf den Metallträger (2, 3) durch Spritzen eines Druckfarbenstrahls durchgeführt wird, wobei die Aufbringungsdicke abhängig ist von der NPB-Konzentration in der Druckfarbe, von dem Durchsatz des Strahls, von der Abmessung des Strahls und der relativen Rastergeschwindigkeit des Strahls.

9. Verfahren gemäß einem der Ansprüche 3 bis 6, **dadurch gekennzeichnet, dass** das Aufbringen der Druckfarbe auf den Metallträger (2, 3) mittels eines Verfahrens zum Aufbringen durch Eintauchen durchgeführt wird, wobei der Metallträger (2, 3) in die Druckfarbe eingetaucht wird, wobei die Druckfarbe gegebenenfalls ein Bindemittel, das vorgesehen ist, um das Anhaften der NPBs an dem Metallträger (2, 3) und/oder ein Verdickungsmittel aufweist, das vorgesehen ist, um die Viskosität der Druckfarbe anzupassen.

10. Verfahren gemäß einem der Ansprüche 3 bis 6, **dadurch gekennzeichnet, dass** das Aufbringen der Druckfarbe auf den Metallträger (2, 3) mittels eines Verfahrens zum Verteilen mittels Schneide durchgeführt wird.

11. Verfahren gemäß einem der Ansprüche 1 bis 10, **dadurch gekennzeichnet, dass** dem Schritt des Aufbringens mindestens einer Bor aufweisenden Schicht (1) ein Schritt des Reinigens des Metallträgers (2, 3) vorangeht, um mögliche Rückstände zu entfernen.

12. Verfahren gemäß mindestens einem der Ansprüche 1 bis 11, **dadurch gekennzeichnet, dass** der Metallträger (2, 3) ein Blech aus Aluminium ist.

13. Vorrichtung (0) zum Detektieren von Neutronen des Gas- oder Ionisierungskammer-Proportionalzählertyps, **dadurch gekennzeichnet, dass** sie aufweist: ein die Kathode ausbildendes Gehäuse (4), wobei das Gehäuse mit einem Gas gefüllt ist und einen Hohlkörper aufweist, der zwei Hauptwände (2) aufweist, die jeweils zwei zueinander im Wesentlichen parallele Innenflächen (21) aufweisen, wobei die beiden Innenflächen (21) Träger sind, die jeweils mit einer festen Schicht (1) aus Bor oder einer Borzusammensetzung bedeckt sind, die durch Kaltpressen des Trägers mit einer Bor in Form von Nanopartikeln aufweisenden Schicht gemäß dem Verfahren gemäß einem der Ansprüche 1 bis 12 erhalten wird.

14. Vorrichtung (0) gemäß Anspruch 13, **dadurch gekennzeichnet, dass** sie ferner aufweist eine die Anode ausbildende Vorrichtung (5), die sich im Inneren des Gehäuses (4) erstreckt, mindestens eine Trennwand (3), die die Kathode ausbildet, die an den Seitenwänden befestigt ist und sich im Inneren des Gehäuses (4) im Wesentlichen parallel zu den Innenflächen des Hohlkörpers erstreckt, wobei die oder jede Trennwand (3) zwei entgegengesetzte Flächen aufweist, die den jeweiligen Innenflächen der beiden Hauptwände des Hohlkörpers zugewandt sind und jeweils mit einer festen Schicht (1) bedeckt sind, die Bor oder eine Borzusammensetzung enthält, die durch Kaltpressen erhalten wird, und dass die Vorrichtung (5), die die Anode ausbildet, aufweist: mindestens einen Abschnitt, der sich in einem Raum zwischen der Trennwand (3) und einer der Innenflächen (21) einer ersten Hauptwand (2) des Hohlkörpers erstreckt, und mindestens einen anderen Abschnitt, der sich in einem anderen Raum zwischen der Trennwand und der anderen Innenfläche der zweiten Hauptwand des Hohlkörpers erstreckt.

15. Vorrichtung (01) zur Neutronendetektion, die zum Detektieren von Neutronen verwendbar ist, die von einem voluminösen Objekt (010), wie zum Beispiel einem Behalter für radioaktive Abfälle emittiert werden, aufweisend eine Mehrzahl von Detektionsvorrichtungen (0) gemäß einem der Ansprüche 13 und 14, wobei die Mehrzahl von Detektionsvorrichtungen (0) einen großen Hohlraum begrenzt, in dessen Inneren ein voluminöses Objekt (010) angeordnet sein kann.

## Claims

1. Method for deposition of a solid layer (1) of boron on a metallic substrate (2, 3) intended to form the cathode of an apparatus (0) for detection of neutrons or an ionisation chamber, **characterised in that** the method comprises at least one step for deposition of at least one layer (1) containing boron in the form of nano particles on the metallic substrate (2, 3) and a step for cold pressing of the metallic substrate (2, 3) with the layer (1) containing boron, the proportion of boron 10 (¹⁰B) in the layer (1) deposited on the metallic substrate (2, 3) lying between 80% and 100%.

2. Method according to claim 1, **characterised in that** the step for deposition is preceded by a step for prepressing of the metallic substrate (2, 3).

3. Method according to claim 1 or 2, **characterised in that**:
- the step for deposition of at least one layer (1) containing boron on the metallic substrate (2, 3) is a step for deposition of an ink based on nano particles of boron (NPB) on the metallic substrate (2, 3); the step for deposition of the ink based on NPB on the metallic substrate (2, 3) being followed by a step for drying of the metallic substrate (2, 3) on which the ink has been deposited so as to only leave the NPB and the dispersant on the metallic substrate (2, 3);
- the step for cold pressing of the metallic substrate (2, 3) is effected on the metallic substrate (2, 3) with the NPB and the dispersant left on the metallic substrate (2, 3); the step for cold pressing of the metallic substrate (2, 3) with the layer (1) containing boron being when appropriate preceded or followed by a step for cooking of the metallic substrate (2, 3) in order to evaporate the water fixed in the pores of the NPB and incinerate or calcine the dispersant.

4. Method according to claim 3, **characterised in that** the ink based on NPB is manufactured by at least:
- one step for manufacture of the NPB;
- one step for suspending the NPB in a solvent containing a dispersing mixture.

5. Method according to claim 4, **characterised in that** the concentration of the dispersant mixture in the ink is less than 0.05%, and **in that** this mixture comprises a cationic polar head and an associative polymer.

6. Method according to one of claims 3 to 5, **characterised in that** the concentration of the NPB in the ink is less than 5%.

7. Method according to one of claims 3 to 6, **characterised in that** the step for deposition of the ink based on NPB on the metallic substrate (2, 3) is executed with a brush, the thickness of the deposition being dependant on the concentration of the NPB in the ink and on the quantity of ink, this quantity being defined according to the surface area of the metallic substrate (2, 3) to be covered by the deposition of the ink.

8. Method according to one of claims 3 to 6, **characterised in that** the step for deposition of the ink based on NPB on the metallic substrate (2, 3) is executed by spraying a jet of ink, the thickness of the deposition being dependent on the concentration of the NPB in the ink, on the delivery rate of the jet, on the size of the jet and on the relative speed of sweeping of the jet.

9. Method according to one of claims 3 to 6, **characterised in that** the deposition of the ink on the metallic substrate (2, 3) is executed by a method for deposition by impregnation in which the metallic substrate (2, 3) is impregnated in the ink, the ink comprising when appropriate a binder intended to promote the adhesion of the NPB to the metallic substrate (2, 3) and/or a thickener intended to adjust the viscosity of the ink.

10. Method according to one of claims 3 to 6, **characterised in that** the deposition of the ink on the metallic substrate (2, 3) is executed by a method for spreading with a knife.

11. Method according to one of claims 1 to 10, **characterised in that** the step for deposition of at least one layer (1) containing boron is preceded by a step for cleaning of the metallic substrate (2, 3) in order to remove any residues.

12. Method according to at least one of claims 1 to 11, **characterised in that** the metallic substrate (2, 3) is an aluminium sheet.

13. Apparatus (0) for detection of neutrons of the proportional counter type with gas or an ionisation chamber, **characterised in that** it comprises an enclosure (4) forming a cathode, the said enclosure being filled with a gas and including a hollow body comprising two main walls (2) respectively having two internal surfaces (21) which are substantially parallel with one another, the two internal surfaces (21) being substrates each covered with a solid layer (1) of boron or a compound of boron obtained by cold pressing of the substrate with a layer containing boron in the form of nano particles according to the method according to one of claims 1 to 12.

14. Apparatus (0) according to claim 13, **characterised in that** it additionally comprises a device (5) forming an anode extending inside the said enclosure (4), at least one intercalated wall (3) forming a cathode, fixed on the said side walls and extending inside the said enclosure (4) substantially parallel to the internal surfaces of the hollow body, the or each intercalated wall (3) having two opposing surfaces facing the respective internal surfaces of the two said main walls of the hollow body and each covered with a solid layer (1) containing boron or a compound of boron obtained by cold pressing, and **in that** the device (5) forming the anode has at least one part extending in a space between the intercalated wall (3) and one of the internal surfaces (21) of a first main wall (2) of the hollow body and at least one other part extending in another space between the intercalated wall and the other internal surface of the second main wall of the hollow body.

15. Device (01) for detection of neutrons which can be used for the detection of neutrons emitted by a voluminous object (010) such as a drum of radioactive waste, comprising a plurality of detection apparatus (0) according to one of claims 13 and 14, the plurality of detection apparatus (0) delimiting a large cavity inside which a voluminous object (010) can be disposed.
